# EUROPEAN PATENT SPECIFICATION

(11) **EP 1 489 551 B1**
(45) Date of publication and mention of the grant of the patent: **30.07.2008**
(21) Application number: 03256995.6
(22) Date of filing: 05.11.2003
(51) Int. Cl.: G06K 9/00

(54) **Biometric authentication system employing various types of biometric data**
Biometrische Authentifizierung mittels verschiedenartiger biometrischer Daten
Système d'authentification biométrique utilisant plusieurs types de données biométriques

(30) Priority: 16.06.2003 JP 2003170723
(43) Date of publication of application: 22.12.2004
(60) Divisional application: 07101606.7
(73) Proprietor: FUJITSU LIMITED, Kawasaki-shi, Kanagawa 211-8588 (JP)
(72) Inventor: Murashita, Kimitaka, Kawasaki-shi Kanagawa 211-8588 (JP); Shinzaki, Takashi, Kawasaki-shi Kanagawa 211-8588 (JP); Suzuki, Shoji, Kawasaki-shi Kanagawa 211-8588 (JP)
(74) Representative: Stebbing, Timothy Charles

(56) References cited:
- EP-A- 0 924 656
- DE-A1- 10 206 843
- US-A- 4 993 068

## Description

The present invention relates to a personal authentication system and, more particularly, to a biometric authentication system and a terminal device for transmitting biometric data.

Traditionally, person authentication has been performed using an ID and password, or a magnetic card, IC card, or the like, to control access to important facilities or to services on a network. In a person authentication system using an ID and password, a combination of a unique number (ID) assigned to each individual user and a password set by the user or the system is stored on the system, and when the user desires to obtain service, the user enters his ID and password which are compared with the user's ID and password stored on the system; when they match, the user is regarded as being an authorized user. In a person authentication system using an IC card, an IC card is issued to an authorized user, and when the user accesses the system, the user has his card read by a card reader for authentication of the user's identity.

The drawback of the ID/password system is that anyone who knows the ID and password can masquerade as the authorized user. As these pieces of information are intangible, it is difficult to know whether or not the password has ever been leaked to a third party. On the other hand, in the case of an IC card, if an IC card is lost or stolen, the user will notice it, but the problem is that the IC cards are often lost or stolen, and there is the danger that an IC card, if lost or stolen, may be illegally used by a third party before the user notices that it has been lost or stolen. In this way, as person authentication is done in the ID/password system by assuming that "the person who knows the ID and password" is an the authorized user, and in the IC card system by assuming that "the person who possesses the IC card" is an authorized user, both systems have problems when applied to person authentication systems.

On the other hand, biometric authentication provides a reliable method of person authentication. In biometric authentication, biometric data that can identify an individual user is used as the user's identifier. User biometric data is difficult to forge, and has the characteristics that no two persons have the same biometric data (it is unique to each individual person), and that the biometric does not change with age as the user grows (unchanged throughout the lifetime of the user). Specific examples include fingerprints, voiceprints, palmprints, palm geometries, veins, irises, retinas, etc. Today, the voice, a signature, etc. are also used as biometric data for person authentication. Biometric authentication is attracting attention as a means of person authentication that cannot be used by a third party masquerading as a legitimate user as is the case with passwords or IC cards.

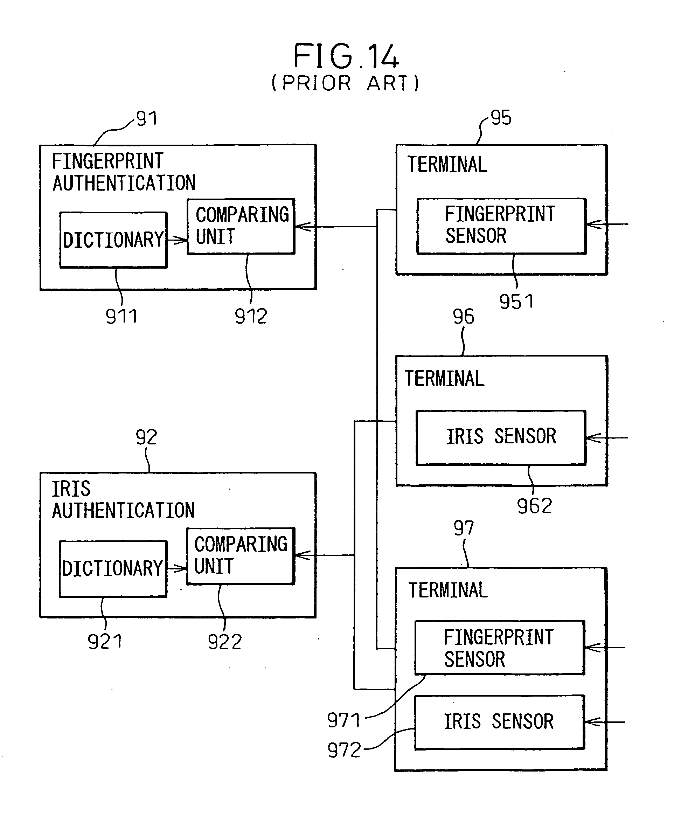

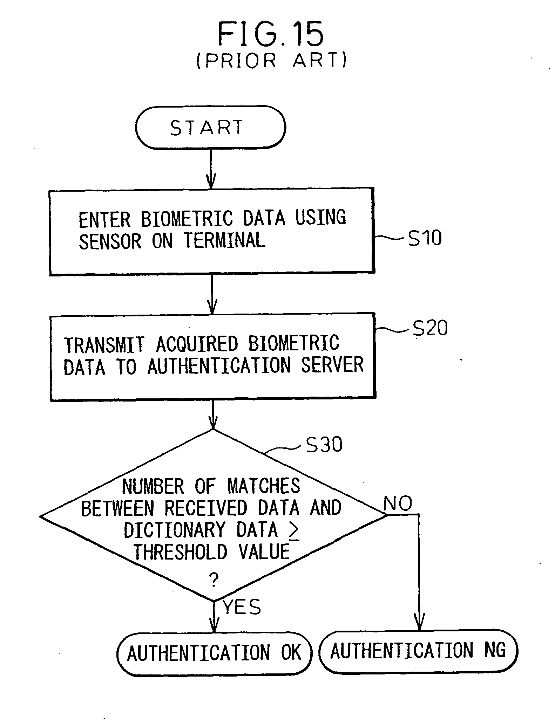

An example of a prior art biometric authentication system is shown in FIG. 14, and a flowchart according to the prior art is shown in FIG. 15. In FIG. 14, a fingerprint authentication system and an iris authentication system are shown by way of example.

The fingerprint authentication system comprises a fingerprint authentication server 91 and client terminals 95 and 97. The fingerprint authentication server 91 contains a fingerprint data dictionary unit 911 and a data comparing unit 912, while the client terminals 95 and 97 are equipped with fingerprint sensors 951 and 971, respectively. Here, the client terminal 97 is also equipped with an iris sensor in addition to the fingerprint sensor so that the terminal can be used with the iris authentication system as well as the fingerprint authentication system. Fingerprint data obtained or provided from users or feature point data extracted from the fingerprint data are stored in advance in the dictionary unit 911 of the fingerprint authentication server 91. These data are used as dictionary data for data comparison.

Next, the process of fingerprint authentication will be described with reference to the flowchart of FIG. 15.
In step S10, the user enters his fingerprint using the fingerprint acquisition sensor installed on the client terminal 95 or 97.

In step S20, the fingerprint data is transmitted to the server 91.
Next, in step S30, the fingerprint data thus transmitted is compared with dictionary data output from the dictionary unit 911. If the number of matching feature points is either equal to or larger than a predetermined threshold value, then it is determined that the fingerprint data are identical, and the user's identity is thus authenticated; on the other hand, after making comparisons against all the dictionary data, if the number of matching points is less than the threshold value, the user is not authenticated.

The iris authentication system likewise comprises an iris authentication server 92 and client terminals 96 and 97. The iris authentication server 92 contains an iris data dictionary unit 921 and a data comparing unit 922, while the client terminals 96 and 97 are equipped with iris sensors 962 and 972, respectively. The authentication process of the iris authentication system is the same as that of the fingerprint authentication system.
In the above prior art authentication system, the iris authentication system and the fingerprint authentication system respectively require the use of sensors that match the respective systems, and a terminal equipped with only one sensor can only be used with the system that supports that sensor. If the terminal is to be made usable with both systems, the terminal has to be equipped with two sensors as is the terminal 97.

Examples of authentication systems using biometric data include one described below (Patent Document 1).

According to Patent Document 1, first the biometric data captured at the registering terminal side is stored on a server by encrypting the data with an encryption key stored on a personal information storage medium that the user possesses. Next, when a user authentication request is made to the server, the server transmits the encrypted biometric data to the authentication terminal. In the authentication terminal, the encrypted biometric data received from the server is decrypted using the encryption key stored on the user's personal information storage medium. The authentication terminal verifies whether the user is a legitimate user or not by comparing the decrypted biometric data with the biometric data that the user entered using a sensor installed on the authentication terminal.

### [Patent Document 1]

Japanese Unexamined Patent Publication No. 2002-297551

The above prior art biometric authentication systems have the following problems.
(1) A plurality of biometric authentication systems are competing, and no standards have been established.

The fingerprint authentication system and the iris authentication system have been illustrated above as specific examples of the prior art, but in practice, various kinds of biometric data, such as fingerprints, voiceprints, palmprints, palm geometries, veins, irises, retinas, voice, are signatures, are used. Each kind of biometric data has high authentication accuracy, is easy to acquire, and is less psychologically intrusive, and it cannot be said in general which kind of biometric data is the best, since each has its own advantages and disadvantages.

The respective kinds of biometric data are used by the respective systems in respective ways according to the specifications (security requirements, number of users, etc.) that differ from system to system. ID/password systems only require the provision of a keyboard, and IC card systems the provision of an IC card reader, but biometric authentication requires the provision of different input devices (sensors) for different kinds of biometric data. Further, even in the case of systems that use the same kind of biometric data, if the format of biometric data (resolution, number of pixels, number of grayscales, etc.) required by one system differs from that required by another system, different kinds of sensors become necessary for the respective systems.

Under the current situation, since the kind and format of biometric data used is not standardized, but differs from system to system, a sensor that matches each particular system must be installed on a terminal when constructing the system. This leads to an increase in the overall system cost.
(2) Turnaround time (time required to accomplish authentication) increases as the number of users increases.

In biometric authentication, usually a user identifier such as an ID is not used, but only biometric data is used for user authentication. When a plurality of users are registered with the system, the system performs matching against each registered user (1:N matching). For example, when 1000 users are registered with the system, a maximum of 1000 authentication operations are performed in user authentication. Even when one matching operation can be accomplished at high speed, for example, in about 100 milliseconds, a maximum of 100-second processing time is required in the system where 1000 users are registered. In this way, response time increases in proportion to the number of users.
(3) Biometric data needs to be transmitted to the server, but this carries the risk of data leakage through eavesdropping and other illegal interceptions.

Biometric data is difficult to forge, but there is a danger that the data may be stolen by a third party. For example, in the case of the fingerprint, image data entered from the fingerprint sensor is transmitted to the server, but if the data is intercepted en route by a third party, the data may be illegally used by the third party. As the fingerprint does not change throughout a person's lifetime, the fingerprint image, once leaked, cannot be revoked and, therefore, cannot be used thereafter for person authentication.

One possible approach to addressing this problem is to encrypt the communication channel, but encryption is not a perfect means as there is a risk of data being deciphered. To solve this problem, in ID/password authentication, a method known as challenge code authentication is employed that transmits challenge data generated from the password, not the password itself.

In challenge code authentication, a variable length password sent from the server is converted at the client into a character string of a fixed length by performing certain processing, and the character string is transmitted to the server. The server performs similar challenge code generation, and verifies whether the challenge codes match. As the password itself is not transmitted, there is no risk of the password being illegally acquired by a third party; furthermore, if provisions are made to generate the challenge code by changing the parameter each time and synchronizing the change between the server side and the user side, the challenge data to be transmitted can be changed each time. MD5 (Message Digest 5) defined in RFC 1321 (Network Working Group Request for Comment: 1321) is well known as a specific example of challenge data generation.

In the case of the challenge data generated in ID/password authentication, the results at the server side and the user side match each other because the source data (password) is the same, but in the case of biometric data such as the fingerprint, as the data entered from the sensor at the user side differs subtly each time, if challenge data are generated at both the user side and the server side, the result will not match. For this reason, challenge code authentication using biometric data has not been possible.
(4) Sensors for biometric data acquisition are expensive, which increases the cost burden of the system operator and/or the user.

Sensors for biometric data acquisition are expensive. The system operator has to install a large number of sensors according to the number of users to ensure user convenience. The cost may be passed on to users, but this would pose a barrier to the acceptance of the system by the user and could impede the widespread use of the system.

The authentication system described in Patent Document 1 is,not intended to support a plurality of different authentication systems, but its purpose is to achieve a system that can perform secure and reliable authentication among different terminals.

In view of the above enumerated problems, it is desirable to provide a terminal and a system that can support a plurality of kinds of biometric authentication, and thereby to solve the above problems (1) to (4) that the prior art systems have not been able to solve.

EP-A-0 924 656 discloses a terminal device and a system according to the preamble of each independent claim. The terminal device is in the form of a key fob including a fingerprint sensor and storage for one or more fingerprints. On detecting a match, the key fob sends an encrypted numerical code to an authentication unit in the form of, for example, a door having associated storage for the encrypted numerical codes of various users.

US-A-4 993 068 discloses an unforgeable personal identification system for identifying users at remote access control sites. The unforgeable personal identification system generates one way encrypted versions of physically immutable identification credentials (facial photo, retinal scan, voice and finger prints). These credentials are stored on a portable memory device (credit card size). At a remote access control site, the user presents his portable memory device and the encrypted identification credentials are read. The user then submits physically to inputting on his physical identification characteristics to the remote access control site. Comparison is performed with the credentials obtained from the memory device and with the user's physical identity to determine whether to allow or deny access at the remote site.

According to a first aspect of the invention, there is provided a terminal device comprising:
a biometric data storing unit which stores a plurality of biometric data associated with a person;
a biometric data acquisition unit which acquires biometric data;
a person authentication unit which authenticates said person based on said acquired biometric data and said biometric data stored in said biometric data storing unit; and
a data output unit which, when identity of said person has been authenticated by said person authentication unit, outputs data for use in a further authentication of said person performed externally to said terminal device;
characterised in that:
said biometric data storing unit stores a plurality of kinds of biometric data; and in that
said data output unit selects and outputs one of the kinds of biometric data from said biometric data storing unit in response to an externally-provided request, as said data for use in said further authentication.

According to a second aspect of the invention, there is provided a biometric authentication system comprising:
a terminal device having a biometric data storing unit which stores a plurality of biometric data associated with a person, a biometric data acquiring unit which acquires biometric data, a first person authentication unit which performs first person authentication using said acquired biometric data and said biometric data stored in said biometric data storing unit, and a data transmitting unit which transmits data; and
an authentication device having a dictionary data storing unit which stores dictionary data to be matched against, and a second person authentication unit which performs second person authentication based on said data transmitted from said data transmitting unit and said dictionary data stored in said dictionary data storing unit;
wherein, when identity of said person has been authenticated in said first person authentication unit, said data to be used in said second person authentication is transmitted from said data transmitting unit to said authentication device;
characterised in that:
said biometric data storing unit stores a plurality of kinds of biometric data; and
said data transmitting unit is arranged to select and output one of the kinds of biometric data stored in said biometric data storage unit in response to a request sent by the authentication device.

Thus, in the present invention, a biometric data storing unit is provided in a terminal device, and a plurality of kinds of biometric data associated with a person are stored in that unit. By thus storing the plurality of kinds of biometric data associated with the person, the terminal device of the present invention can be used with a plurality of different authentication systems.

This is, specific biometric data selected from among the kinds of plurality of biometric data stored in the biometric data storing unit is transmitted from the terminal device to an authentication device so that person authentication can be performed at the authentication device.

Further, as the biometric data used for the person authentication is data stored in the biometric data storing unit of the terminal device, corresponding data having a certain bit length and corresponding to the biometric data can be generated based on the biometric data and used for the person authentication.

In the drawings:
FIG. 1 is a diagram showing the basic configuration of a terminal device used for authentication according to the present invention.
FIG. 2 is a diagram showing a first embodiment of the present invention.
FIG. 3 is a diagram showing an operation flow (part 1) according to the first embodiment of the present invention.
FIG. 4 is a diagram showing an operation flow (part 2) according to the first embodiment of the present invention.
FIG. 5 is a diagram showing a second embodiment of the present invention.
FIG. 6 is a diagram showing a third embodiment of the present invention.
FIG. 7 is a diagram showing a fourth embodiment of the present invention.
FIG. 8 is a diagram showing a fifth embodiment of the present invention.
FIGS. 9 to 11 are diagrams showing systems not in accordance with the present invention.
FIG. 12 is a diagram showing a six embodiment of the present invention.
FIG. 13 is a diagram showing a system not in accordance with the present invention.
FIG. 14 is a diagram showing one example of a prior art biometric authentication system.
FIG. 15 is a diagram showing a biometric authentication flow according to the prior art.

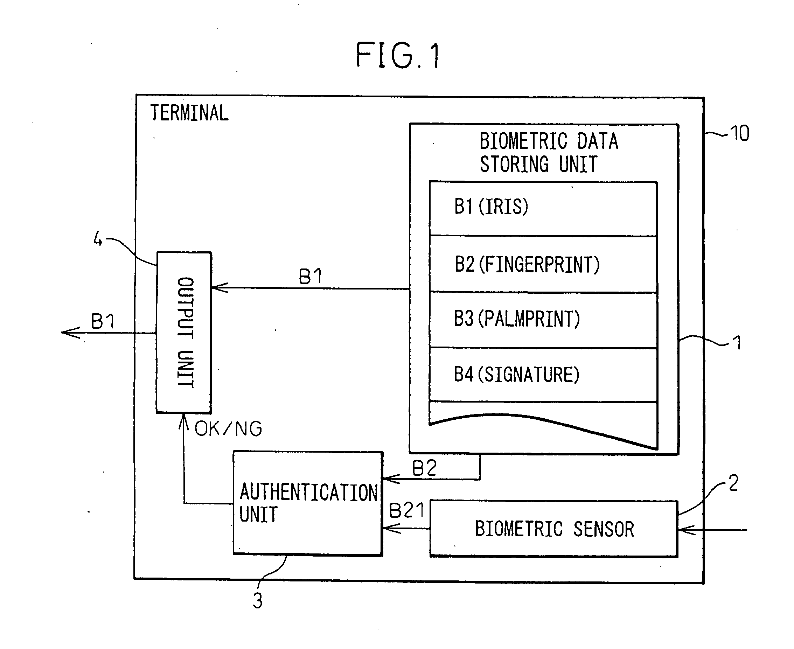

The preferred embodiments of the present invention will be described below with reference to the accompanying drawings. Throughout the drawings, the same components are indicated by the same reference numerals.
First, the basic configuration of a terminal according to the present invention, which is common to the several embodiments, will be described with reference to FIG. 1. The terminal 10 according to the present invention is shown in FIG. 1. The terminal 10 has the function of outputting biometric data B1 requested by an authentication device (server) (not shown) in a biometric authentication system. Any device capable of outputting biometric data can be used as the terminal 10; for example, a portable telephone, a PDA (Personal Digital Assistant), an IC card, or the like can be used advantageously because of their convenience of portability.
The terminal 10 according to the present invention contains a biometric data storing unit 1 in which a plurality of biometric data are stored in advance, an acquisition unit or a sensor 2 for acquiring biometric data from the owner of the terminal device, an owner authentication unit 3 for performing the biometric authentication of the terminal owner, and a biometric data output unit 4 for outputting the biometric data stored in the biometric data storing unit 1. The biometric data stored in the biometric data storing unit 1 is used for biometric authentication; more specifically, the data includes such data as fingerprint, voiceprint, palmprint, vein, iris, retina, signature, face, etc. and feature point data extracted from such data.

Suppose here that the biometric data acquisition sensor 2 is a fingerprint sensor, and that the biometric data requested by the authentication device not shown is iris data B1. In the prior art, it has not been possible to transmit the iris data unless the terminal is equipped with a sensor such as a CCD camera that can acquire the iris data. On the other hand, with the terminal 10 embodying the present invention, the iris data B1 can be transmitted even when the terminal is not equipped with an iris sensor. More specifically, fingerprint data B21 as the owner's biometric data is entered through the fingerprint sensor 2. The fingerprint data B21 thus entered is sent to the authentication unit 3. At the same time, of the biometric data stored in the biometric data storing unit 1, the fingerprint data B2 is input to the authentication unit 3. The authentication unit 3 compares the two and, when the owner's identify is authenticated, the iris data B1 requested by the authentication device is retrieved from the biometric data storing unit 1, and transmitted to the authentication device via the output unit 4.

In this way, as the terminal according to the present invention can store a plurality of kinds of biometric data in advance, it can be used with any kind of biometric authentication system. The above description has been given dealing with an example in which the data that the authentication device requests is the iris data B1 and the biometric sensor of the terminal is one that accepts the fingerprint data B2 as an input, but it will be appreciated that the above is an example given only for illustrative purposes.
In the basic configuration described above, the terminal 10 has been shown as incorporating the sensor 2 and the authentication unit 3 to perform the authentication of the terminal owner, but the sensor 2 and the authentication unit 3 need not necessarily be incorporated in the terminal 10. The sensor 2 and the authentication unit 3 may be provided, not in the terminal 10, but in some other device.

### (Embodiment 1)

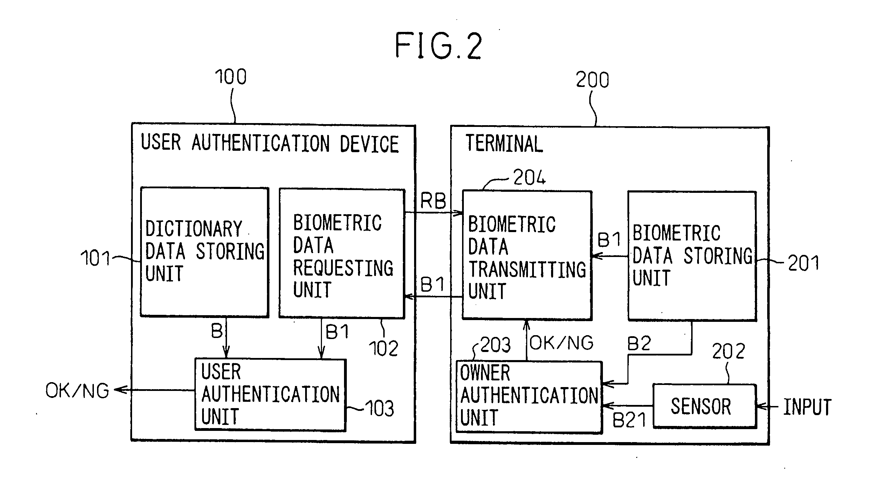

As shown in FIG. 2, the user authentication system of this embodiment comprises a user authentication device or server 100 and a terminal device 200. Usually, there are many terminal devices 200, and also the number of user authentication devices is not limited to one. The terminal device 200 may be a personal computer, a portable information terminal such as a portable telephone or a PDA, or an IC card.

The user authentication device 100 contains a biometric data requesting unit 102 which requests the terminal 200 to transmit biometric data, a dictionary data storing unit 101 in which dictionary data as biometric data necessary for biometric authentication of users are stored, and a user authentication unit 103 which performs user authentication.

On the other hand, the terminal device 200 contains a biometric data storing unit 201 in which a plurality of biometric data are stored in advance, a sensor 202 for acquiring biometric data from the owner of the terminal device, an owner authentication unit 203 which performs the biometric authentication of the owner, and a biometric data transmitting unit 204 which outputs the biometric data retrieved from the biometric data storing unit 201. A plurality of kinds of biometric data for authenticating the user's identify are stored in advance in the biometric data storing unit 201. More specifically, the biometric data refers to data obtained from such data as fingerprint, voiceprint, palmprint, vein, iris, retina, signature, face, etc.

In the present embodiment, the authentication at the user authentication device is performed using iris data while, at the terminal, the authentication is performed using fingerprint data. This, however, is an example given only for illustrative purposes, and it will be appreciated that the biometric data used for user authentication at the user authentication device is not limited to the iris data but any other kind of biometric data may be used, and also that the biometric sensor installed on the terminal is not limited to the fingerprint sensor. Furthermore, different kinds of biometric data need not be used between the user authentication performed at the user authentication device and the owner authentication performed at the terminal. However, in the case of a portable information terminal such as a portable telephone or a PDA, or an IC card, it is desirable that a sensor, such as a fingerprint sensor, that is small in size and has high authentication accuracy is used as the sensor of the terminal.

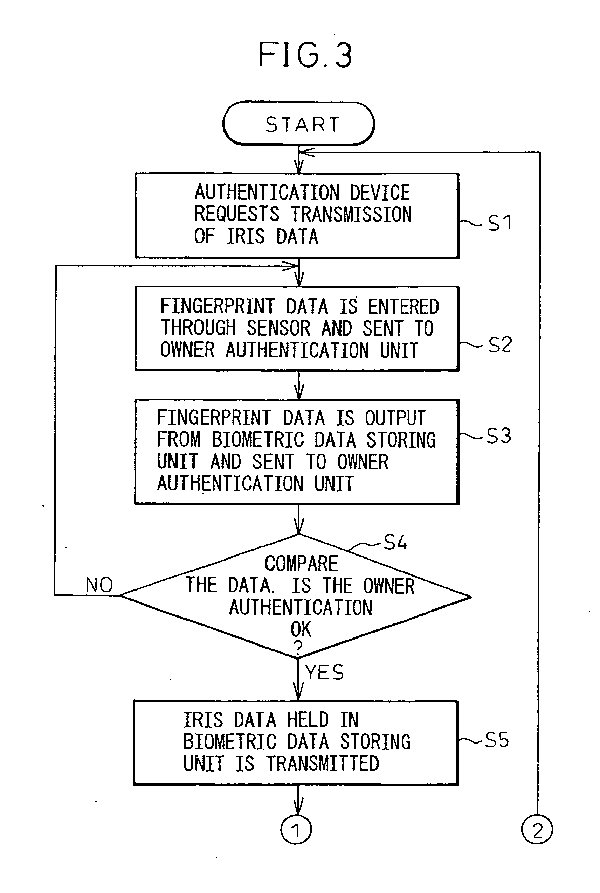

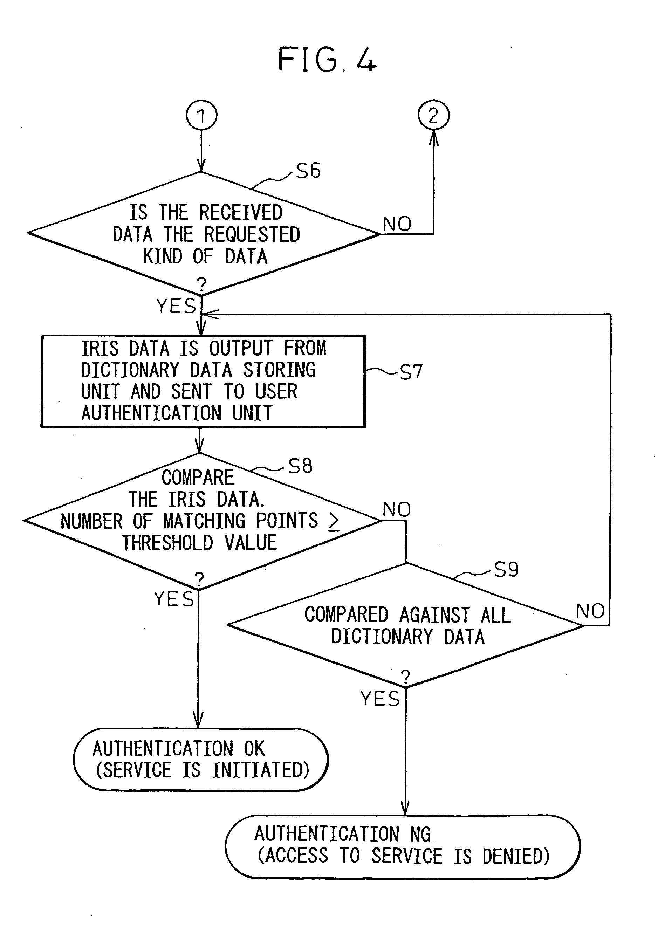

Next, the operation flow of the system according to the present embodiment will be described with reference to FIGS. 2 to 4.
First, in step S1, the biometric data requesting unit 102 sends a biometric data request signal RB to the terminal device 200, requesting transmission of the iris data B1.

In step S2, in response to the biometric data request signal RB received from the user authentication device 100 and displayed, for example, on a display device (not shown), the user enters his biometric data using the sensor of the terminal device 200. That is, the user presses his finger having the registered fingerprint onto the sensor 20 which, in this embodiment, is a fingerprint sensor. The sensor 202 reads the user's fingerprint and sends it to the owner authentication unit 203.

On the other hand, in step S3, the owner's fingerprint data B2 stored in the biometric data storing unit 201 is sent to the owner authentication unit 203.

In step S4, the fingerprint data B1 acquired by the sensor and the fingerprint data B2 retrieved from the biometric data storing unit 201 are compared in the owner authentication unit 203, for example, by converting them into feature point data, and the authentication of the owner is performed. If the result of the authentication is OK, that is, if the number of matches between the feature points of the fingerprint data entered from the user and the feature points of the fingerprint data retrieved from the biometric data storing unit 201 is equal to or larger than a predetermined threshold value, the result of the authentication is output to the biometric data transmitting unit 204.

Next, in step S5, the biometric data transmitting unit 204 retrieves from the biometric data storing unit 201 the iris data B1, the biometric data requested by the user authentication device 100, and transmits it to the user authentication device 100.

In step S6, the biometric data requesting unit 102 of the user authentication device 100 checks the received biometric data B1 to see if it is the kind of data that the user authentication device requested. If the received data is not the iris data B1, a request for transmission of the iris data is sent once again (step S1). If the received data is the iris data B1, the received data is passed on to the user authentication unit 103.

In step S7, iris data B stored in the dictionary data storing unit 101 is sent to the user authentication unit 103 where authentication is performed by comparing it with the received data.

In step S8, the iris data B1 received by the user authentication unit and the iris data B retrieved from the dictionary data storing unit 101 are compared, for example, by converting them into feature point data, and authentication is performed to verify whether the user is a legitimate user or not. If the user is verified as a legitimate user, service is initiated. If the number of matching points is less than the predetermined threshold value, the process proceeds to step 9.

In step S9, it is determined whether the received data has been compared against all the dictionary data; if comparisons with all the data have been completed, the authentication is rendered NG, and the user is denied access. If there is any dictionary data remaining to be compared, the process returns to step S7 where a comparison with the next iris data B is performed.

In the present embodiment, the user authentication device 100 has been described as using iris authentication to verify the identify of the user, but in the case of any other kind of biometric authentication, whether it be palm geometry authentication, vein authentication, or fingerprint authentication, if the biometric data required by the corresponding authentication device is acquired and stored in advance in the biometric data storing unit 201 of the terminal device 200, the necessary biometric data can be transmitted in response to a request from the authentication device.

In this way, even when biometric data that cannot be entered using the sensor installed on the terminal is needed for authentication, the user terminal need not be equipped with an additional device such as an additional biometric data acquisition sensor. The same single terminal on which the user can enter only one kind of biometric data can be used for many kinds of user authentication.

Provisions may be made so that the biometric data can be acquired and stored into the user terminal at a place (for example, a shop) where the user applies for subscription to a service that requires user authentication. By so doing, the sensor for acquiring the biometric data need not be installed on the terminal device that the user uses to use the service, but need only be installed in the shop that accepts subscriptions to the service.

### (Embodiment 2)

In the prior art, biometric data, if it is acquired from the same person, differs subtly each time it is transmitted from the terminal device, because the data is entered each time using the sensor. On the other hand, the biometric data transmitted to the user authentication device from the terminal device embodying the present invention is always the same data because the data held in the biometric data storing unit 201 is transmitted. Theoretically, the biometric data may be used as-is like a user ID. However, if the biometric data is used as-is, the amount of data is large, and the data contains a high degree of redundancy.

In the second embodiment, challenge data such as used in ID authentication is generated, and the challenge data is used as data for locating specific dictionary data. The challenge data is data corresponding to biometric data. That is, in the second embodiment, challenge data is generated in the user authentication device by using the received biometric data, and the challenge data thus generated is used as an identifier for identifying the user.

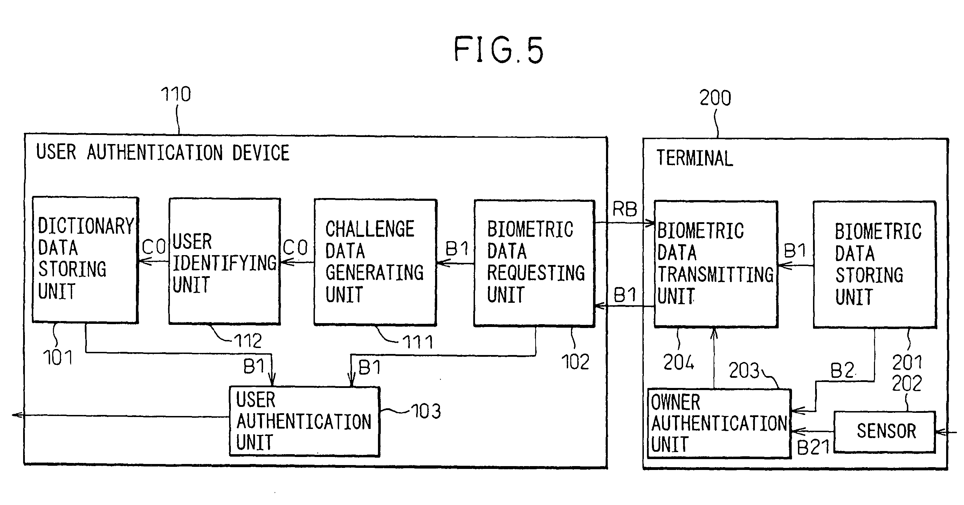

To achieve this, the user authentication device 110 includes, as shown in FIG. 5, a challenge data generating unit 111 and a user identifying unit 112 which are placed between the biometric data requesting unit 101 and dictionary data storing unit 102 of the first embodiment. The terminal device 200 is the same as that in the first embodiment.

The challenge data generating unit 113 generates challenge data C0 by using the biometric data B1 received from the terminal device 200. MD5 defined in RFC 1321, for example, may be used as a specific method of challenge data generation. MD5 is a one-way hash function that outputs 128-bit fixed-length data for variable-length input data. A 128-bit user ID can thus be generated. The dictionary data is stored in the dictionary data storing unit in such a manner that the data can be located by reference to the challenge data C0, for example, by using the challenge data as the address. The user identifying unit 112 identifies the user by receiving the challenge data C0 generated by the challenge data generating unit 111, and requests the dictionary data storing unit 101 to output the dictionary data B1 associated with the thus identified user. The dictionary data storing unit 101 sends the biometric data B1 of the specified user to the user authentication unit 103 which performs user authentication by comparing the dictionary data B1 of the specified user with the biometric data B1 received from the terminal device. Here, for simplicity, the dictionary data B1 used for comparison and the biometric data received from the terminal device are both designated by B1, but the biometric data transmitted by being retrieved from the biometric data storing unit 201 and the data stored in the dictionary data storing unit 101 need not be exactly the same data.

As explained with reference to the operation flow of the first embodiment, in biometric authentication, usually, the authentication is performed by sequentially matching the received data against the user dictionary data registered within the user authentication device, to determine whether there is a matching user (1:N matching). In such 1:N matching, if there are 1000 registered users, for example, the authentication has to be performed a maximum of 1000 times. Even if the time required to accomplish each authentication is as short as about 100 ms, 1000 times will amount to 100 seconds. As the number of registered users increases, the time (turnaround time) that the user authentication device requires to accomplish the authentication increases, and the response thus drops. In the present embodiment, by locating the dictionary data based on the challenge data, the number of pieces of biometric data to be matched against can be reduced to one. Accordingly, since the authentication need be performed only once (1:1 matching) to determine whether the user is a legitimate user or not, the authentication can be always accomplished with a short and constant turnaround time, irrespective of the number of registered users.

### (Embodiment 3)

When challenge data is generated as shown in the second embodiment, the challenge data output from the challenge data generating unit is sufficiently small in value compared with the input data, i.e., the biometric data. This gives rise to the possibility that the same challenge data may be generated for different biometric data (an occurrence known as a hash value collision). If this happens, the associated biometric data cannot be located using the challenge data.

There are also cases where the system contains not only the terminal device of the present invention but also the terminal device of the prior art type. The prior art terminal device is equipped with a sensor for acquiring biometric data requested by the user authentication device, and acquires the biometric data using the sensor each time the transmission is requested; as a result, the biometric data transmitted to the user authentication device differs each time. If challenge data is generated based on such differing biometric data, the generated data differs each time, and therefore, cannot be used to identify the user.

To solve this problem, in the third embodiment, the user authentication device is configured to be able to accommodate both types of authentication processes, one for authenticating the user by generating the challenge data from the received biometric data and thereby identifying the user, and the other for authenticating the user by sequential matching against all the registered users.

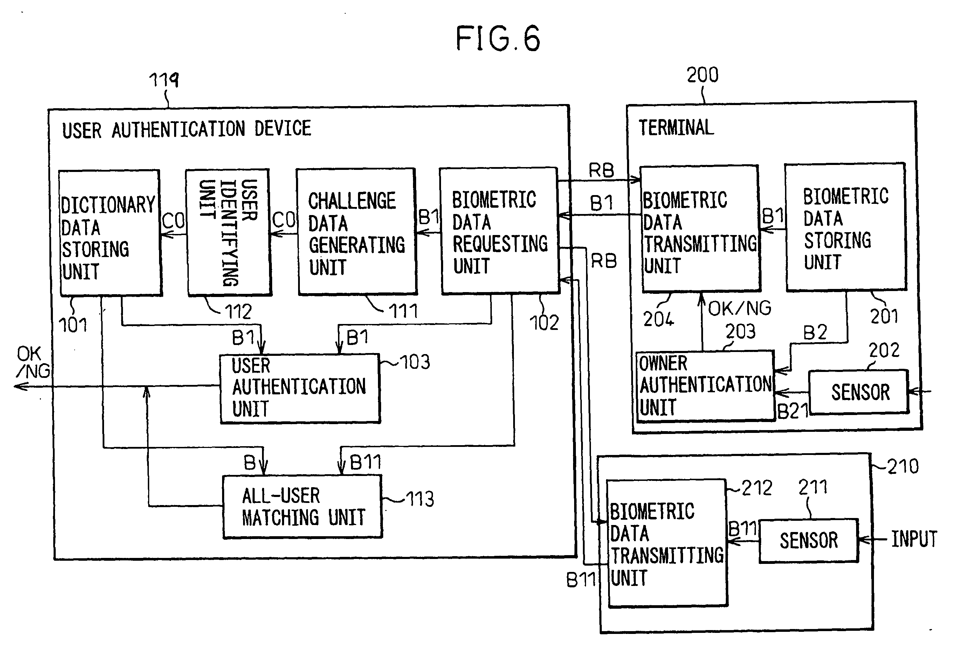

As shown in FIG. 6, in the present embodiment, there is not only the terminal device 200 of the present invention but also the terminal device 210 of the prior art type on the user side. The prior art terminal device 210 is equipped with a sensor (for example, a CCD camera) 211 for entering the biometric data (iris data B11) requested by the user authentication device 111, and in response to the request from the user authentication device, transmits, via its biometric data transmitting unit 212, the iris data B11 acquired by the sensor 211. The user authentication device 111 differs from that of the second embodiment by the inclusion of an all-user matching unit 113.

First, based on the received biometric data, the user authentication device 111 generates challenge data. If the user can be identified based on the generated challenge data, the user authentication unit 103 performs authentication by using the dictionary data which, in this case, is the iris data associated with the identified user. If the user's terminal device is the terminal device 200 of the present invention, the challenge data C0 can be generated from the biometric data B1; therefore, the associated dictionary data is located and a comparison is made in the same manner as in the second embodiment. In this case, the result of the authentication can be obtained, usually, by performing the authentication process only once.

On the other hand, if the user's terminal device is the terminal device 210 of the prior art type, the transmitted iris data B11, if it is acquired from the same user, differs each time, and the generated challenge data also differs; as a result, authentication based on the challenge data is rendered NG. In this case, therefore, the all-user matching unit 113 performs user authentication by comparing the received iris data B11 against all the dictionary data B of the users registered in the user authentication device. Here, the function of the all-user matching unit 113 may be incorporated in the user authentication unit 103.

Even when the terminal device used is the terminal device 200 of the present invention, and the iris data B1 is transmitted from this terminal device, there can occur cases where the authentication by the user authentication unit 103 fails, as earlier described. In such cases also, the authentication process switches to the all-user matching unit 113.

If provisions are made to be able to recognize whether the biometric data transmitted to the user authentication device is one transmitted from the terminal 200 or one transmitted from the terminal 210, the method of user authentication can be selected according to the type of the transmitting terminal. That is, a signal identifying the type of the terminal 200 or the terminal 210 is transmitted to the user authentication device together with the biometric data signal, and in the case of the biometric data signal B1 transmitted from the terminal 200, the authentication is performed by using the challenge data, while in the case of the biometric data signal B11 transmitted from the terminal 210, the authentication is performed by sequential matching against all the users.

In the present embodiment, the higher the rate at which the terminal device 200 of the present invention is used, the shorter the average turnaround time. This also offers the effect of promoting the use of the terminal device 200 of the present invention because the response is quicker when the terminal device 200 of the present invention is used.

### (Embodiment 4)

When transmitting raw biometric data from the terminal device to the user authentication device, there is the possibility that the data may be leaked to a third party by eavesdropping, or other illegal interception, en route. Since biometric data is data unique to each individual user and does not change throughout the lifetime of the user, it cannot be changed casually like a password. To prevent the leakage of biometric data to a third party on the network, it is desirable that the biometric data be processed before transmission. In the event of leakage, if the biometric data is processed data, the data can be discarded, and differently processed data can be used. It is desirable that the data be processed by an irreversible process that transforms the data to a form from which the original data cannot be recovered.

For example, when performing person authentication using fingerprint data, it is determined whether there is a matching fingerprint by making comparisons using the relative positions of specific patterns such as end points, branch points, break points, etc. found in the fingerprint patterns. Accordingly, if the fingerprint data is processed, for example, by magnifying or demagnifying a fingerprint image at a specific position or inverting the pixel values of the fingerprint image, interchanging images at specific positions, exchanging a portion of the image with a fingerprint image of another finger, deleting a portion, inserting a dummy fingerprint image, etc., then the resulting processed data will be entirely different in pattern and type and in relative position from the original fingerprint data.

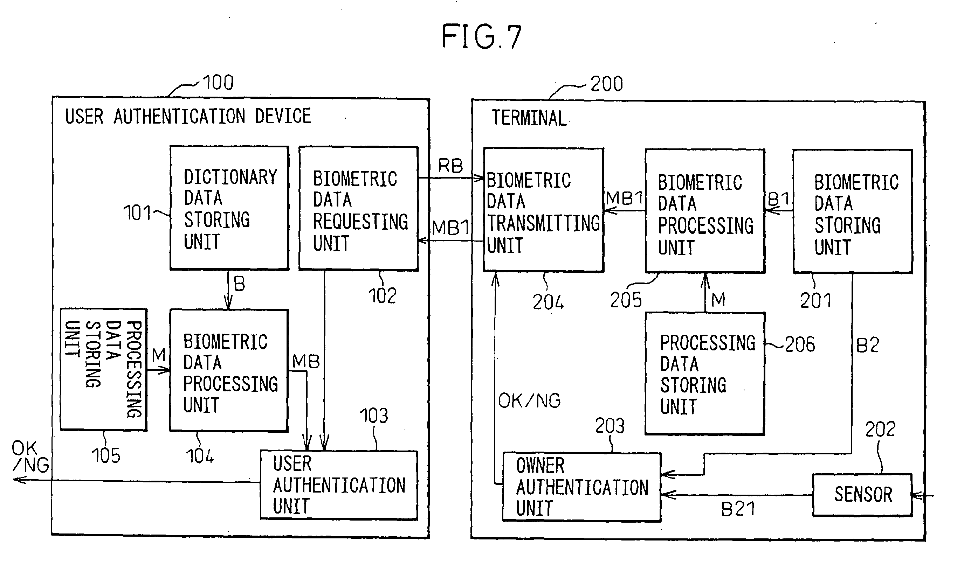

As shown in FIG. 7, in the present embodiment, the terminal device 200 in the system shown in the first embodiment further comprises a biometric data processing unit 205 and a processing data storing unit 206 which stores a processing table used for biometric data processing. The biometric data B1 output from the biometric data storing unit 201 is processed by the biometric data processing unit 205 based on the processing data M output from the processing data storing unit 206, and is output as processed biometric data MB1.
The user authentication device 100 further comprises a biometric data processing unit 104 and a processing data storing unit 105. The biometric dictionary data B output from the dictionary data storing unit is processed by the biometric data processing unit 104 based on the processing data M held in the processing data storing unit 105, i.e., the data identical to the data held in the terminal 200, and the thus processed data is output as processed biometric dictionary data MB. The processed biometric data MB1 and the processed biometric dictionary data MB are compared with each other in the user authentication unit for authentication.

The processing data storing unit 206 of the terminal 200 and the processing data storing unit 105 of the user authentication device 100 both store the same data in table form indicating how the biometric data is to be processed. For example, processing such as indicated by the following ID can be applied to the fingerprint image.

(ID) (Description of processing)
0: Nothing is done
1: Invert pixel values of fingerprint image
2: Magnify fingerprint image
3: Demagnify fingerprint image
A-Z: Interchange images indicated by same letter
a-z: Exchange image with dummy fingerprint image assigned ID a to z
Consider the case where the fingerprint image is divided into 5 × 5 blocks and processing is performed block by block; in this case, 25 processing data items such as shown below, for example, are stored in the biometric data processing data storing unit 206.

### 1101A2BaB103bA301C03123Cc

This means applying the following processing to the fingerprint image data.
Invert the pixel values in the first block,
invert the pixel values in the second block,
do nothing for the third block,
invert the pixel values in the fourth block, interchange the fifth block with the 14th block, magnify the image in the sixth block,
interchange the seventh block with the ninth block,
exchange the eighth block with the dummy fingerprint of ID = a,
invert the pixel values in the 10th block,
...
..., and
exchange the 25th block with the dummy fingerprint of ID = c.
This processing data, i.e., the processing table, is shared between the user authentication device 100 and the terminal device 200. In this way, when the data indicating how the biometric data is processed is shared between the user authentication device 100 and the terminal device 200, the same processed biometric data can be generated at both devices. The processed biometric data is transmitted over the network; therefore, if the processed biometric data is leaked en route, the raw biometric data of the user can be prevented from leaking, and by generating re-processed biometric data, user authentication can be performed as usual.

In the present embodiment, only one kind of processing table is provided, but instead, a plurality of tables may be provided; in that case, data indicating which table is to be used is transmitted from the terminal device to the user authentication device or from the user authentication device to the terminal device prior to the transmission of biometric data and, based on that data, the processing data to be used for processing the biometric data is determined. Further, by applying different processing each time by using the plurality of tables, the system's security against eavesdropping can be enhanced.

It will also be recognized that the security can be further enhanced if the network path or the transmitted data itself is encrypted as in a VPN (Virtual Private Network) or SSL (Secure Sockets Layer), rather than just transmitting the processed biometric data onto the network.

In the present embodiment, it has been described that the biometric data requested by the user authentication device is processed each time the transmission is requested; alternatively, the biometric data once processed may be stored and the processed data thus stored may be transmitted the next time the transmission is requested.

### (Embodiment 5)

In the foregoing embodiments, image data, etc. obtained by various kinds of biometric data acquisition devices are directly stored in the biometric data storing unit 201 and, when a request is received, feature points are extracted from the necessary biometric data and transmitted to the authentication device or the biometric data itself is transmitted and feature points are extracted at the authentication device for feature matching. In the present embodiment, on the other hand, the biometric data acquiring unit is configured as a biometric data feature point extracting device 300, and feature points are extracted in advance from various kinds of biometric data and stored as feature point data in the biometric data storing unit 201 of the terminal device 200, thereby eliminating the need for feature point extraction at the terminal device 200 or the user authentication device 100.

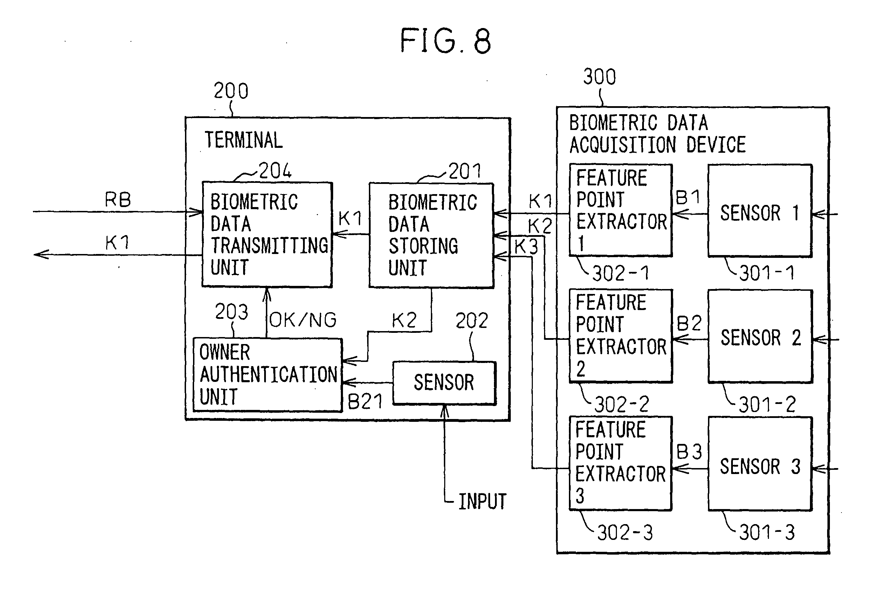

The biometric data feature point extracting device 300 for extracting feature points in advance from various kinds of biometric data is installed, for example, in a shop or the like that offers services that require biometric authentication. As shown in FIG. 8, the biometric data feature point extracting device 300 is equipped with various kinds of biometric sensors 301-1, 301-2, and 301-3, and feature point extractors 302-1, 302-2, and 302-3 for extracting feature points from the respective kinds of biometric data. In the figure, three kinds of sensors are shown for illustrative purposes, but the sensors and feature point extractors are not limited to the three kinds shown here. The biometric sensors 301-1, 301-2, and 301-3 are used to acquire respectively different kinds of biometric data. For example, the biometric sensor 301-1 is for acquiring iris data B1, the biometric sensor 301-2 is for acquiring fingerprint data B2, and the biometric sensor 301-3 is for acquiring vein data B3. The feature point extractors 302-1, 302-2, and 302-3 extracts feature points K1, K2, and K3 from the respective kinds of biometric data for the respective kinds of authentication.

The user connects the terminal 200 of the present invention to the biometric data feature point extracting device 300 via a wireless or wired link, and stores the obtained feature point data into the biometric data storing unit 201 of the terminal device 200. Then, when transmission of the biometric data B1 is requested from the authentication device, the corresponding feature point data K1 is transmitted. Likewise, for the fingerprint data B21 output from the sensor 202 of the terminal 200, the feature point data K2 corresponding to the fingerprint data B2 is output from the biometric data storing unit 201, so that the owner authentication unit 203 need not convert the fingerprint data B2 into the feature point data. However, the fingerprint data B21 output from the sensor 202 is converted into feature point data, as in the foregoing embodiments.

In the present embodiment, the feature point data are generated in advance and stored in the terminal device; therefore, when a request is received, the feature point data for the requested biometric data can be transmitted from the terminal device to the user authentication device. This serves to reduce the time required for authentication processing. That is, the authentication processing time is the sum of the time required to acquire the biometric data, the time required to extract the feature points, and the time required to compare the feature point data against the dictionary data; in the present embodiment, the feature point extraction time can be reduced to zero because the feature point data is extracted in advance.

The accuracy of biometric authentication depends on the accuracy of the biometric data and the accuracy of feature point data extraction. The authentication performance can be enhanced by acquiring clean biometric data from a sensor and by accurately extracting feature points after performing preprocessing such as noise elimination.

The use of a high precision sensor is a prerequisite to acquiring clean biometric data and complicated preprocessing, etc. must be applied if accurate feature point extraction is to be ensured. Equipping each terminal device with a high precision sensor and performing complicated feature point extraction in each terminal device or in the authentication device, as in the prior art system, would not only increase the system cost but reduce the authentication processing speed. In the present embodiment, high precision sensors are installed in a data acquisition place, and various kinds of biometric data are acquired in advance. As each terminal device need not be equipped with a high precision sensor, the overall system cost can be reduced. Furthermore, as the feature points are extracted accurately by the acquisition device at the time of the data acquisition, the CPU of the terminal device need not have a high processing capability, and the cost of the terminal device can be reduced. Moreover, the authentication processing time can be reduced because feature point extraction is not performed in each authentication process.

Further, as the feature point data is also irreversible data, secrecy of the original biometric data can be maintained. However, it is not desirable to transmit the feature point data itself. It is desirable to process the data, for example, by inserting dummy feature points or deleting some of the feature points.

In the previously described second embodiment, by utilizing the characteristic that the biometric data transmitted from the terminal device to the user authentication device is always the same, challenge data was generated in the user authentication device and used to locate specific biometric data stored as dictionary data. In one possible system, identical challenge data is generated in both the terminal device and the user authentication device, and the terminal device transmits the challenge data to the user authentication device which performs challenge data authentication.

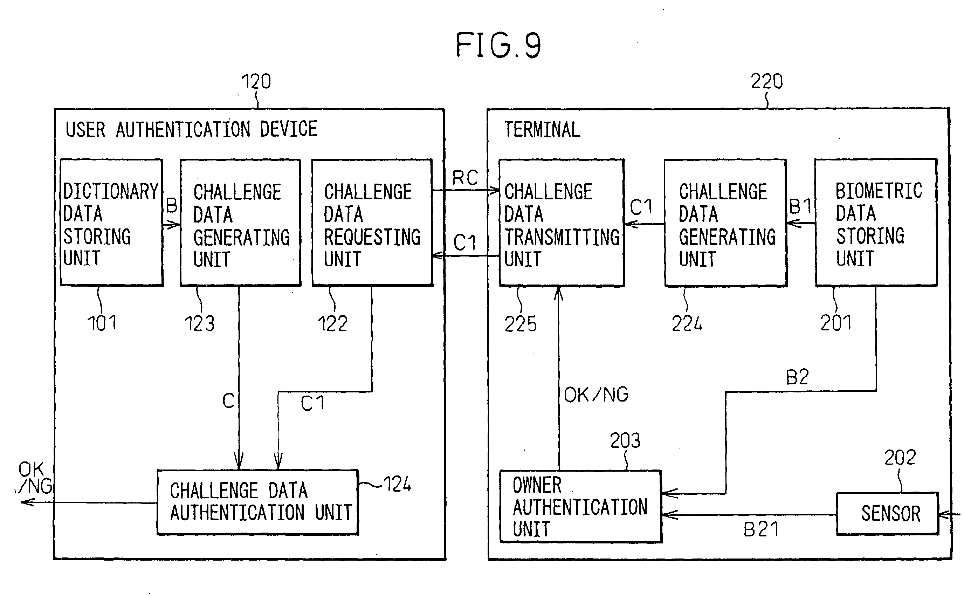

As shown in FIG. 9, the terminal device 220 of this system differs from the terminal device of the first embodiment in that a challenge data generating unit 224 for generating challenge data from the biometric data output from the biometric data storing unit is newly added, and in that the biometric data transmitting unit is replaced by a challenge data transmitting unit 225.

The user authentication device 120 comprises a challenge data requesting unit 122 which sends a request signal to the terminal device 220 to request transmission of the challenge data, a dictionary data storing unit 101 in which biometric data of all legitimate users are stored as dictionary data, a challenge data generating unit 123 which generates challenge data from the biometric data B stored in the dictionary data storing unit 101, and a challenge data authentication unit 124 which performs person authentication by comparing the challenge data received from the terminal device 220 with the challenge data generated by the challenge data generating unit 123.

When the terminal device 220 receives a challenge data request RC from the user authentication device, the owner authentication unit 223 of the terminal device 220 performs person authentication by comparing the user's fingerprint data B21 entered through the sensor 202 with the fingerprint data B2 stored in the biometric data storing unit 211. When the operator is verified as being the legitimate owner, the biometric data storing unit outputs the iris data B1 needed by the user authentication device. The challenge data generating unit 224 generates challenge data C1 from the thus output iris data B1, and transmits the challenge data C1 to the user authentication device 120.

In the user authentication device 120, challenge data C is created from the biometric data B stored as dictionary data, and the challenge data C is sent to the challenge data authentication unit 124. The challenge data authentication unit 124 compares the received challenge data C1 with the challenge data C generated from the dictionary data, and verifies whether they match or not. If they match, the user is verified as a legitimate user. In authentication based on challenge data, the result of the authentication can be obtained quickly as there is no need to perform matching against all data as in biometric authentication.

In the present system, the biometric data are stored in advance in both the terminal device and the authentication device and, when challenge data is needed, the challenge data is generated from the biometric data; alternatively, the challenge data may be generated in advance from the biometric data, and stored in the respective devices.

However, as is described later, greater security against eavesdropping, etc. can be provided if the challenge data transmitted from the terminal device to the user authentication device is changed each time. To generate different challenge data each time, the original biometric data must be stored. Furthermore, when the terminal device is designed for use with a plurality of user authentication devices, it is desirable that the challenge data be changed for each user authentication device. Accordingly, rather than generating the challenge data in advance, it is preferable to generate the challenge data from the biometric data each time user authentication is performed.

As described above, greater resistance to illegal access such as eavesdropping can be provided if the data transferred between the terminal device and the user authentication device is changed each time. In view of this, in another possible system, challenge data is generated using a parameter (hereinafter referred to as the "challenge parameter") which is changed each time the challenge data is generated.
In this system, the challenge parameter is transmitted from the user authentication device to the terminal device, and identical challenge data is generated in both devices.

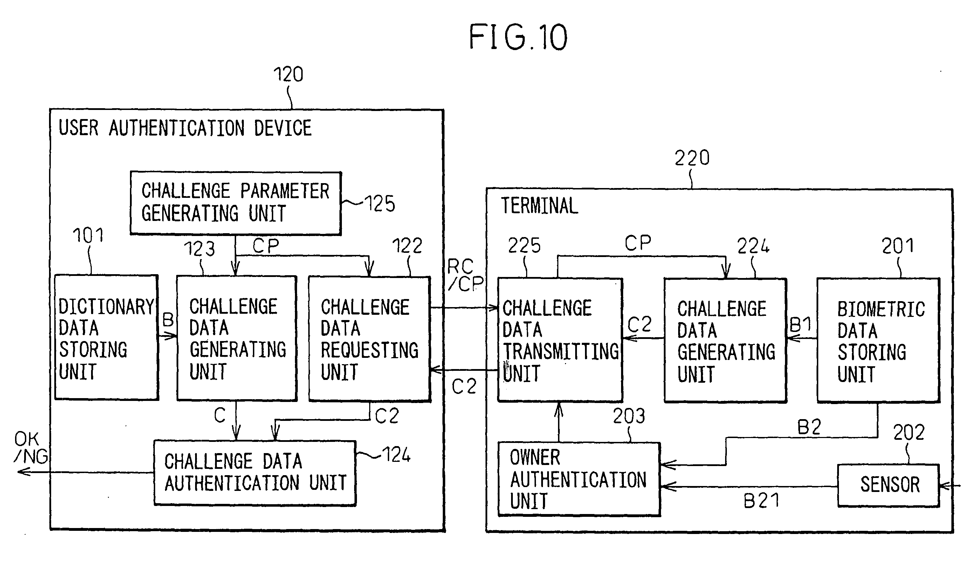

As shown in FIG. 10, in this system, a challenge parameter generating unit 125 is newly added in the user authentication device 120 of FIG. 9, and the challenge parameter CP generated by the challenge parameter generating unit 125 is supplied to the challenge data generating unit 123; at the same time, the challenge parameter CP is transmitted from the challenge data requesting unit 122 to the terminal device 220 where the received challenge parameter CP is transferred via the challenge data transmitting unit 223 to the challenge data generating unit 224. Based on the challenge parameter CP, the terminal 220 generates challenge data C2 from the iris data B1 retrieved from the biometric data storing unit 201, and transmits the challenge data C2 to the user authentication device 120. Based on the same challenge parameter CP, the user authentication device 120 generates challenge data C from the iris data B stored in the dictionary data storing unit. In this way, the user authentication device 120 and the user terminal 220 generate the challenge data from the biometric data by using the common parameter. Different challenge data can be generated by changing the parameter.

One possible method of challenge data conversion using the challenge parameter is, for example, by encryption. The challenge parameter generating unit 125 has the function of generating, for example, a common key in accordance with DES (Data Encryption Standard), and sends the generated encryption key to the challenge data generating unit 123. The challenge data generating unit 123 encrypts the biometric data using the encryption key, and generates the challenge data from the result by using a challenge data generation algorithm such as MD5. In an encryption algorithm such as DES, if the encryption key is different, the generated encrypted data is entirely different. By changing the encryption key each time, the challenge data can be changed each time.

If the encryption process is complicated, simple logic operations may be used instead. For example, a 4-byte data train may be generated, and this data train and the biometric data may be converted using logic operations such as AND, OR, EXOR, etc. Further, in the MD5 algorithm also, if one byte data is different, the generated challenge data is entirely different; in view of this, specification of a conversion process, such as inverting a portion of unused fingerprint image data or interchanging it with another portion, should be set as the parameter.

As the data to be transmitted on the communication channel can be changed each time as described above, security against illegal access such as eavesdropping can be enhanced.

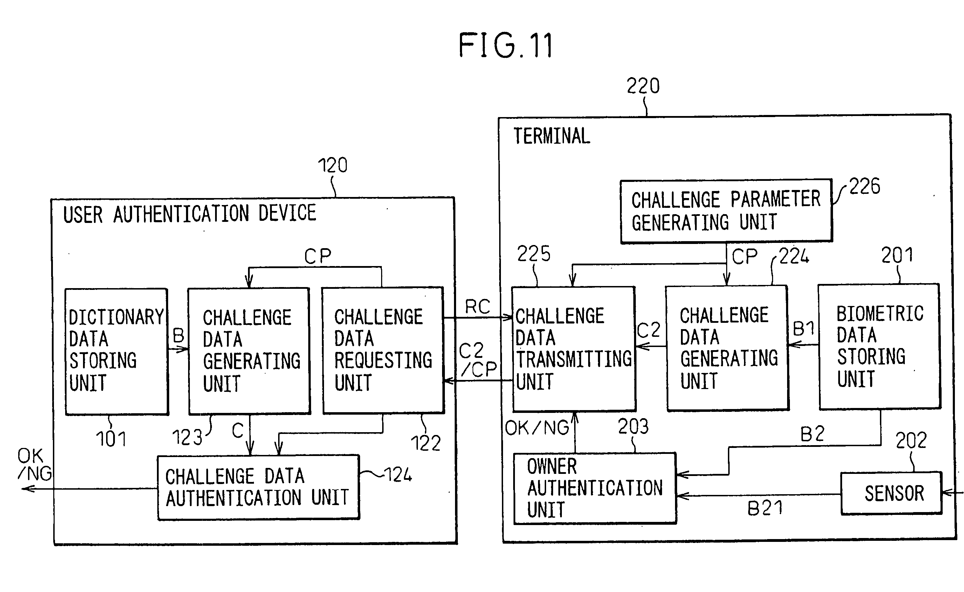

In the foregoing system of Fig. 10, the challenge data was generated in the user authentication device 120; in contrast, in an alternative system, the challenge data is generated in the terminal device 220. As shown in FIG. 11, the challenge parameter generating unit 226 is provided in the user terminal device 220. The challenge parameter CP generated by the challenge parameter generating unit 226 is supplied to the challenge data generating unit 224; the challenge parameter CP is also sent via the challenge data transmitting unit to the user authentication device 120 where it is used as the parameter when the challenge data generating unit 123 generates challenge data. In this case also, the challenge data that differs each time can be generated by using the common challenge parameter between the terminal 220 and the user authentication device 120; accordingly, in this system, as in the one described earlier, security against eavesdropping, etc. on the network can be enhanced.

The challenge data generated from the user's biometric data is data unique to the user; therefore, the data may be used not only for user authentication purposes but also as the key for encrypting and decrypting the user's personal files, etc. stored, for example, within the system.

In one possible implementation, if a service system (not shown) provided to the user after the user authentication, for example, is configured so that the user can store personal information or documents or the like within the system, such personal information or documents or the like may be stored by encrypting them using the challenge data as the key. Personal information thus encrypted can be protected against leakage, theft, or other unauthorized use, and security can thus be enhanced. When the user desires to access the encrypted files, after the user authentication, the files are decrypted at the user's request by using the challenge data used for the user authentication as the decryption key. The user can thus access the files freely. This also alleviates the user's management burden since the personal information, etc. on the system can be encrypted without the user having to manage the encryption/decryption key. A further advantage is that the personal information, etc. once encrypted cannot be decrypted by a third party because the challenge data to be used as the key is not generated unless the terminal device owner's identify is authenticated.

Even in cases where the challenge data is changed each time, the challenge data can be used to encrypt the personal data such as files as described above. This can be accomplished by encrypting the personal data by using the challenge data that is expected to be used the next time the user authentication is performed. In other words, the challenge data created to encrypt the personal data is used as the challenge data when performing the user authentication the next time. By so doing, when the user authentication is performed the next time by generating the challenge data, the encrypted files can be decrypted by using the challenge data used for the user authentication. That is, after the user authentication, the user's data which were encrypted by the same challenge data as used for the current user authentication are all decrypted using the same challenge data. Then, the challenge parameter to be used for the next authentication is set, and the challenge data to be used when performing the user authentication the next time is generated using the parameter; after user access is completed, the user's data are encrypted using the thus generated challenge data as the encryption key.

### (Embodiment 6)

In biometric authentication systems used today, no standards have been defined yet on the format, etc. of biometric data even when using the same kind of biometric data. As a result, in fingerprint authentication, for example, a certain system performs authentication using a 256-grayscale (8-bit) monochrome fingerprint image of 320 × 320 pixels, while another system uses a binary (1-bit) image of 256 × 300 pixels. In view of this, in the present embodiment, provisions are made to transmit biometric data from the user terminal to the user authentication device after converting the data to the format requested by the authentication device. The device can thus be adapted for use with any biometric system regardless of the format of the biometric data used.

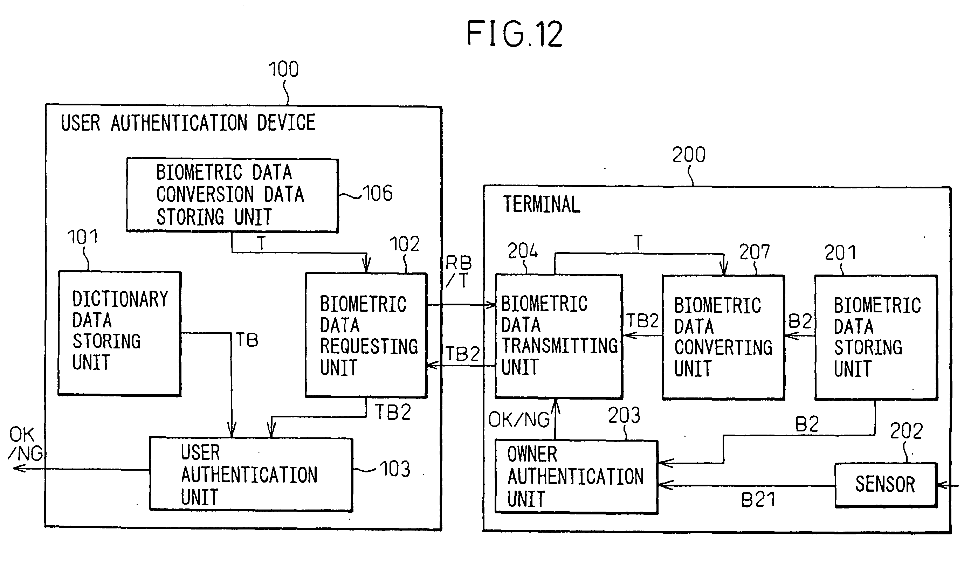

As shown in FIG. 12, in the present embodiment, a biometric data conversion data storing unit 106 is newly added in the user authentication device 100 of the first embodiment of the present invention, and a biometric data converting unit 207 which converts the biometric data output from the biometric data storing unit is newly added in the terminal device 200. In the present embodiment, however, the person authentication performed at the user authentication device is fingerprint authentication, not iris authentication, and the biometric data transmitted from the terminal device is the iris data.

In the biometric data conversion data storing unit 106 of the user authentication device 100, the format of biometric data used in the system is stored as conversion data T. More specifically, the conversion data carries information indicating the number of pixels, the number of grayscales, etc. The conversion data T output from the biometric data conversion data storing unit 106 is transmitted to the user terminal 200 via the biometric data requesting unit. In the biometric data converting unit 207 of the terminal 200, the biometric data B2 output from the biometric data storing unit 201 is converted, using the received conversion data T, into the format requested by the authentication device, to generate converted biometric data TB2.
Suppose, for example, that a 256-grayscale fingerprint image of 300 × 300 pixels is held in the biometric data storing unit of the terminal device, and that the conversion data held in the biometric data conversion data storing unit 106 of the user authentication device 100 specifies conversion to a binary image with a resolution of 256 × 320 pixels; in this case, based on the conversion data received from the user authentication device, the biometric data converting unit 207 increases the number of lines in the horizontal direction to 320 pixels by adding 10 lines each at left and right of the horizontal rows, and reduces the number of lines in the vertical direction to 256 pixels by deleting 22 lines each from the top and bottom of the vertical columns. Further, the 256-grayscale fingerprint image is converted into a binary image.
In this way, the biometric data B2 is converted into the data TB2 that can be handled by the user authentication device 100, and the thus converted data is transmitted to the user authentication device 100 in accordance with a request from the user authentication device 100. In the dictionary data storing unit 101 of the user authentication device 100, fingerprint data is held as the data TB that can be handled by the user authentication device 100, and this data is compared with the received fingerprint data TB2 for user authentication. As the terminal device 200 can convert the biometric data held therein into the format that the user authentication device 100 can use for authentication, user authentication of any format can be addressed.

Measures can be taken to protect the data from eavesdropping and other illegal conduct by adopting such strategies as generating different challenge data each time. In addition to that, if the communication channel is encrypted, data leakage through illegal conduct such as eavesdropping can be prevented more effectively. Though not shown here, an RSA private/public key pair is provided in the user authentication device, and the public key is transmitted to the terminal device which, using the public key, encrypts all the data to be transmitted to the user authentication device. In the user authentication device, the encrypted data received from the terminal device are decrypted using the private key. A file encrypted by a public key can be decrypted only by its corresponding private key. As the encrypted data can be decrypted only by the user authentication device, there is no risk of data leakage even if the data is intercepted during transmission.

In embodiments of the invention, when transmission of the biometric data is requested from the user authentication device, the requested biometric data associated with the legitimate user must be prestored in the user terminal, and the biometric data to be matched against as the dictionary data must be held in the user authentication device.

Biometric data to be stored in the biometric data storing unit of the terminal device and the dictionary data storing unit of the user authentication device can be acquired in several ways; one possible way may be for the user to visit the service provider's shop or the like when applying for subscription to a service and to have his biometric data be sampled by equipment installed there and be stored in the user authentication device and the terminal device that are set up to use the service. However, if the biometric data acquisition equipment has to be installed at each service provider, the burden of the service provider increases. The reality is that, even when a plurality of service providers employ the same fingerprint authentication, the fingerprint data acquisition equipment has to be installed at each service provider, leading to high cost. The following system provides an inexpensive biometric data acquisition/utilization system which acquires and utilizes biometric data via a network.

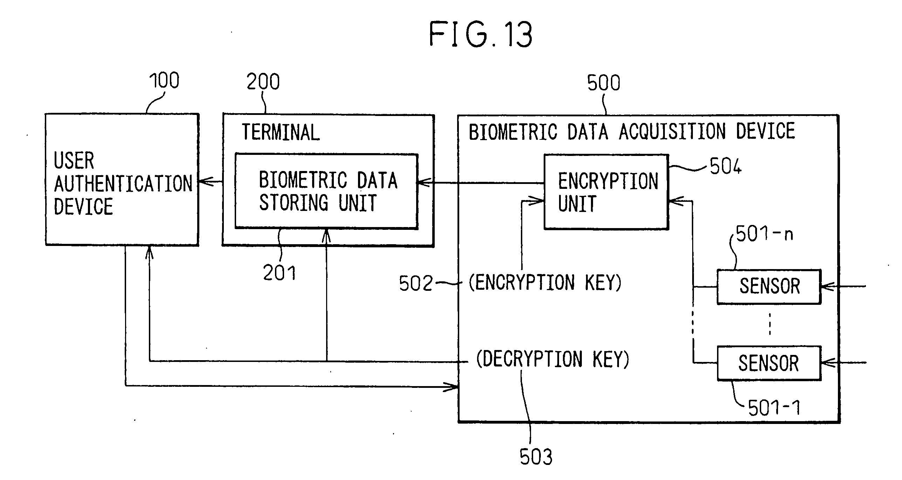

The biometric data acquisition/utilization system shown in FIG. 13 comprises a biometric data acquisition device 500, a terminal device 100, and a user authentication device 200. The biometric data acquisition device 500 comprises sensors 501-1 to 501-n, such as a fingerprint sensor, an iris sensor, a CCD camera, etc., that can capture various kinds of biometric data used in various person authentication systems, and an encryption unit 504 that performs encryption using an encryption key 502. There is also included a decryption key storing unit for storing a decryption key 503 which is used to decrypt encrypted data. It is desirable that all the kinds of biometric data used can be acquired by a single biometric data acquisition unit installed in one place. The biometric data acquisition unit can be installed in a large retail store or in front of a station in the same style as a photo booth.

The user carrying the terminal 200 enters necessary biometric data using the various sensors 501-1 to 501-n installed on the biometric data acquisition device 500. The entered biometric data is encrypted by the encryption unit using the certain encryption key 502, and stored into the biometric data storing unit 201 of the user's terminal 200.

When storing the data, the terminal 200 may be connected to the biometric data acquisition device 500 via a connector or the like, or may be connected using a wireless technology such as BlueTooth. For use of the biometric data acquisition device 500, a charge may be made to the user, or it may be made available for use at no charge. As the encrypted biometric data is stored in the terminal 200, a fee can be charged to the user authentication device 100 or the user when the acquired biometric data is used on the network, as will be described below. When storing the biometric data in the terminal 200 without encrypting, a charge is made to the user for use of the biometric data acquisition device 500. When the user finishes using the biometric data acquisition device 500, the user's biometric data, encrypted or unencrypted, is erased from the biometric data acquisition device 500.

Next, when the user requests the service provider on the Internet to provide the service and uses his biometric data for person authentication, the user transmits the encrypted biometric data, stored in the terminal 200, to user authentication device 100 of the service provider. The service provider requests the biometric data acquisition device 500 or its operator to provide the decryption key 503 for decrypting the encrypted data. The biometric data acquisition device 500 provides the decryption key 503 for a fee to the user authentication device.

The fee may be charged to the user of the terminal 200. In that case, the decryption key 503 is provided for a fee to the terminal 200 in accordance with a request from the terminal 200. The biometric data decrypted by the terminal is transmitted directly to the user authentication device 100 for use therein.

In this way, the biometric data acquisition system providing the biometric data acquisition service can thus charge the service provider or the owner of the terminal for use of the service when the user's biometric data acquired is used for user authentication. Though not specifically illustrated here, the fee may be charged each time the authentication is performed. That is, the system may be configured so as to charge the fee according to the number of times the biometric data is used.

Such biometric data acquisition systems eliminate the need to install biometric data acquisition equipment at each service provider, so that biometric authentication systems can be constructed at low cost. Since the biometric data acquisition system can charge fees to service providers, a biometric data acquisition business becomes economically feasible.

Biometric data captured by the biometric data acquisition system may be used for various kinds of biometric authentication. Accordingly, in order to achieve high-precision authentication, provisions are made to be able to provide the user and the user authentication device with such data that facilitates biometric authentication by applying preprocessing such as noise elimination, boundary enhancements facilitating extraction of feature points, etc.

In this way, the service provider need not have physical shops, and can provide services to any user on the network regardless of where the user is physically located.

## Claims

1. A terminal device (200) comprising:
a biometric data storing unit (201) which stores a plurality of biometric data associated with a person;
a biometric data acquisition unit (202) which acquires biometric data;
a person authentication unit (203) which authenticates said person based on said acquired biometric data and said biometric data stored in said biometric data storing unit; and
a data output unit (204) which, when identity of said person has been authenticated by said person authentication unit, outputs data for use in a further authentication of said person performed externally to said terminal device;
**characterised in that**:
said biometric data storing unit (201) stores a plurality of kinds of biometric data; and **in that**
said data output unit (204) selects and outputs one of the kinds of biometric data from said biometric data storing unit (201) in response to an externally-provided request, as said data for use in said further authentication.

2. A terminal device as claimed in claim 1, comprising a biometric data processing unit (205) which processes at least partially said biometric data selected from said biometric data storing unit (201), wherein said processed biometric data is output.

3. A terminal device as claimed in claim 1 or 2, comprising a biometric data converting unit (207) which converts the format of said biometric data selected from said biometric data storing unit (201), wherein said format-converted biometric data is output.

4. A biometric authentication system comprising:
a terminal device (200) having a biometric data storing unit (201) which stores a plurality of biometric data associated with a person, a biometric data acquiring unit (202) which acquires biometric data, a first person authentication unit (203) which performs first person authentication using said acquired biometric data and said biometric data stored in said biometric data storing unit (201), and a data transmitting unit (204) which transmits data; and
an authentication device (100, 110, 119) having a dictionary data storing unit (101) which stores dictionary data to be matched against, and a second person authentication unit (103) which performs second person authentication based on said data transmitted from said data transmitting unit (204) and said dictionary data stored in said dictionary data storing unit (101);
wherein, when identity of said person has been authenticated in said first person authentication unit (203), said data to be used in said second person authentication is transmitted from said data transmitting unit (204) to said authentication device (100, 110, 119);
**characterised in that**:
said biometric data storing unit (201) stores a plurality of kinds of biometric data; and
said data transmitting unit (204) is arranged to select and output one of the kinds of biometric data stored in said biometric data storage unit (201) in response to a request sent by the authentication device (100, 110, 119).

5. A biometric authentication system as claimed in claim 4, wherein said authentication device (110, 119) comprises a corresponding data generating unit (111) which, based on said biometric data transmitting from said data transmitting unit (20A), generates corresponding data having a certain bit length and corresponding to said biometric data, wherein
specific dictionary data stored in said dictionary data storing unit (101) is located by using said generated corresponding data, and said second person authentication unit (103) performs said person authentication based on said specific dictionary data and said transmitted biometric data.

6. A biometric authentication system as claimed in claim 5, wherein when said person authentication based on said specific dictionary data cannot be performed, said authentication device (119) performs said person authentication based on all of said dictionary data stored in said dictionary data storing unit (101) and said transmitted biometric data.

7. A biometric authentication system as claimed in claim 4, 5, or 6, wherein said terminal device (200) includes a first biometric data processing unit (205) which processes at least partially said biometric data selected from said biometric data storing unit (201), and a first processing data storing unit (206) which stores data that said first biometric data processing unit (205) uses to process said biometric data, and
said authentication device (100) includes a second biometric data processing unit (104), which processes said dictionary data at least partially, and a second processing data storing unit (105) which stores data that said second biometric data processing unit (104) uses to process said dictionary data, and wherein
said second person authentication unit (103) performs said person authentication based on said processed biometric data and said processed dictionary data.

8. A biometric authentication system as claimed in any of claims 4-7, wherein said authentication device (100) comprises a conversion data storing unit (106) which stores conversion data concerning said biometric data used in said second person authentication unit (103), and
said terminal device (200) comprises a biometric data converting unit (207) which converts the format of said biometric data stored in said biometric data storing unit (201), and wherein
said biometric data converting unit (207) converts the format of said biometric data by using said conversion data transmitted from said conversion data storing unit (106), and said format-converted biometric data is transmitted to said authentication device (100).

## Patentansprüche

1. Terminalvorrichtung (200), enthaltend:
eine Biometriedatenspeichcreinheit (201), die eine Mehrzahl von Biometriedaten in Verbindung mit einer Person speichert;
eine Biometriedatenbeschaffungseinheit (202), die Biometriedaten beschafft;
eine Personenauthentifizierungseinheit (203), die die Person basierend auf den beschafften Biometriedaten und den Biometriedaten authentifiziert, die in der Biometriedatenspeichereinheit gespeichert sind; und
eine Datenausgabeeinheit (204), die, wenn die Identität der Person durch die Personenauthentifizierungseinheit authentifiziert wurde, Daten zur Verwendung bei einer weiteren extern bezüglich der Terminalvorrichtung ausgeführten Authentifizierung der Person ausgibt;
**dadurch gekennzeichnet, dass**:
die Biometriedatenspeichereinheit (201) eine Mehrzahl von Arten von Biometriedaten speichert, und dass
die Datenausgabeeinheit (204) eine der Arten von Biometriedaten von der Biometriedatcnspeichereinheit (201) in Abhängigkeit von einer extern bereit gestellten Anforderung als die Daten zur Verwendung bei der weiteren Authentifizierung auswählt und ausgibt.

2. Terminalvorrichtung nach Anspruch 1, enthaltend eine Biometriedatenverarbeitungseinheit (205), die wenigstens teilweise die Biometriedaten verarbeitet, die von der Biometriedatenspeichereinheit (201) ausgewählt wurden, wobei die verarbeiteten Biometriedaten ausgegeben werden.

3. Terminalvorrichtung nach Anspruch 1 oder 2, enthaltend eine Biometriedatenkonvertiereinheit (207), die das Format der Biometriedaten konvertiert, die von der Biometriedatenspeichereinheit (201) ausgewählt wurden, wobei die formatkonvertierten Biometriedaten ausgegeben werden.

4. Biometrieauthentifizierungssystem, enthaltend:
eine Terminalvorrichtung (200) mit einer Biometriedatenspeichereinheit (201), die eine Mehrzahl von Biometriedaten in Verbindung mit einer Person speichert, einer Biometriedatenbeschaffungseinheit (202), die Biometriedaten beschafft, einer ersten Personenauthentifizierungseinheit (203), die eine erste Personenauthentifizierung unter Verwendung der beschafften Biometriedaten und der Biometriedaten ausführt, die in der Biometriedatenspeichereinheit (201) gespeichert sind, und einer Datenübertragungseinheit (204), die Daten überträgt; und
eine Authentifizierungsvorrichtung (100, 110, 119) mit einer Lexikondatenspeichereinheit (101), die Lexikondaten zur Abstimmung dagegen speichert, und einer zweiten Personenauthentifizierungseinheit(103), die eine zweite Personenauthentifizierung basierend auf den Daten, die von der DaLenübertragungseinheit (204) übertragen wurden, und den Lexikondaten ausführt, die in der Lexikondatenspeichereinheit (101) gespeichert sind;
wobei, wenn die Identität der Person in der ersten Personenauthentifizierungseinheit (203) authentifiziert wurde, die Daten, die bei der zweiten Personenauthentifizierung zu verwenden sind, von der Datenübertragungseinheit (204) zu der Authentifizierungsvorrichtung (100, 110, 119) übertragen werden;
**dadurch gekennzeichnet, dass**:
die Biometriedatenspeichereinheit (201) eine Mehrzahl von Arten von Biometriedaten speichert; und
dass die Übertragungseinheit (204) angeordnet ist, um eine der Arten von Biometriedaten, die in der Biomctriedatenspeichereinheit (201) gespeichert sind, in Abhängigkeit von einer Anforderung auszuwählen und auszugeben, die von der Authentifizierungsvorrichtung (100, 110, 119) geschickt wurde.

5. Biometrieauthentifizierungssystem nach Anspruch 4, wobei die Authentifizierungsvorrichtung (110, 119) eine Korrespondenzdatenerzeugungseinheit (111) enthält, die basierend auf der Biometriedatenübertragung von der Datenübertragungseinheit (20A) Korrespondenzdaten erzeugt, die eine bestimmte Bitlänge haben und den Biometriedaten entsprechen, wobei
spezifische Lexikondaten, die in der Lexikondatenspeichereinheit (101) gespeichert sind, unter Verwendung der erzeugten Korrespondenzdaten lokalisiert werden, und die zweite Personenauthentifizierungseinheit (103) die Personenauthentifizierung basierend auf den spezifischen Lexikondaten und den übertragenen Biometriedaten ausführt.

6. Biometrieauthentifizierungssystem nach Anspruch 5, wobei, wenn die Personenauthentifizierung basierend auf den spezifischen Lexikondaten nicht ausgeführt werden kann, die Authentifizierungsvorrichtung (119) die Personenauthentifizierung basierend auf allen den Lexikondaten, die in der Lexikondatenspcichereinheit (101) gespeichert sind, und den übertragenen Biometriedaten ausführt.

7. Biometrieauthentifizierungssystem nach Anspruch 4, 5 oder 6, wobei die Terminalvorrichtung (200) eine erste Biometriedatenverarbeitungseinheit (205), die wenigstens teilweise die Biometriedaten verarbeitet, die von der Biometriedatenspeichereinheit (201) ausgewählt wurden, und eine erste Verarbeitungsdatenspeichereinheit (206) enthält, die Daten speichert, die die erste Biometriedatenverarbeitungseinheit (205) verwendet, um die Biometriedaten zu verarbeiten, und
die Authentifizierungsvorrichtung (100) eine zweite Biometriedatenverarbeitungseinheit (104), die die Lexikondaten wenigstens teilweise verarbeitet, und eine zweite Verarbeitungsdatenspeichereinheit (105) enthält, die Daten speichert, die die zweite Biometriedatenverarbeitungseinheit (104) verwendet, um die Lexikondaten zu verarbeiten, und wobei
die zweite Personenauthentifizierungseinheit (103) die Personenauthenifizierung basierend auf den verarbeiteten Biometriedaten und den verarbeiteten Lexikondaten ausführt.

8. Biometrieauthentifizierungssystem nach einem der Ansprüche 4 - 7, wobei die Authentifizierungsvorrichtung (100) eine Konversionsdatenspeichereinheit (106) enthält, die Konversionsdaten speichert, die die Biometriedaten betreffen, die in der zweiten Personenauthentifizierungseinheit (103) verwendet werden, und
die Terminalvorrichtung (200) eine Biometriedatenkonvertiereinheit (207) enthält, die das Format der Biometriedaten konvertiert, die in der Biometriedatenspeichereinheit (201) gespeichert sind, und wobei
die Biometriedatenkonvertiereinheit (207) das Format der Biometriedaten unter Verwendung der Konversionsdaten konvertiert, die von der Konversionsdatenspeichereinheit (106) übertragen wurden, und die formatkonvertierten Biome-Lriedaten zu der Authentifizierungsvorrichtung (100) übertragen werden.

## Revendications

1. Dispositif terminal (200) comprenant :
une unité de mémorisation de données biométriques (201) qui mémorise une pluralité de données biométriques associées à une personne,
une unité d'acquisition de données biométriques (202) qui acquiert des données biométriques,
une unité d'authentification de personne (203) qui authentifie ladite personne sur la base desdites données biométriques acquises et desdites données biométriques mémorisées dans ladite unité de mémorisation de données biométriques, et
une unité de sortie de données (204) qui, lorsque l'identité de ladite personne a été authentifiée par ladite unité d'authentification de personne, fournit en sortie des données pour une utilisation dans une autre authentification de ladite personne exécutée de manière externe audit dispositif terminal,
**caractérisé en ce que** :
ladite unité de mémorisation de données biométriques (201) mémorise une pluralité de types de données biométriques, et **en ce que**
ladite unité de sortie de données (204) sélectionne et fournit en sortie l'un des types de données biométriques à partir de ladite unité de mémorisation de données biométriques (201) en réponse à une demande fournie de manière externe, en tant que lesdites données pour une utilisation dans ladite autre authentification.

2. Dispositif terminal selon la revendication 1, comprenant une unité de traitement de données biométriques (205) qui traite au moins partiellement lesdites données biométriques sélectionnées à partir de ladite unité de mémorisation de données biométriques (201), dans lequel lesdites données biométriques traitées sont fournies en sortie.

3. Dispositif terminal selon la revendication 1 ou 2, comprenant une unité de conversion de données biométriques (207) qui convertit le format desdites données biométriques sélectionnées à partir de ladite unité de mémorisation de données biométriques (201), dans lequel lesdites données biométriques à format converti sont fournies en sortie.

4. Système d'authentification biométrique comprenant :
un dispositif terminal (200) comportant une unité de mémorisation de données biométriques (201) qui mémorise une pluralité de données biométriques associées à une personne, une unité d'acquisition de données biométriques (202) qui acquiert des données biométriques, une première unité d'authentification de personne (203) qui exécute une première authentification de personne en utilisant lesdites données biométriques acquises et lesdites données biométriques mémorisées dans ladite unité de mémorisation de données biométriques (201) et une unité de transmission de données (204) qui transmet les données, et
un dispositif d'authentification (100, 110, 119) ayant une unité de mémorisation de données de dictionnaire (101) qui mémorise des données de dictionnaire devant être mises en correspondance, et une deuxième unité d'authentification de personne (103) qui exécute une deuxième authentification de personne sur la base desdites données transmises depuis ladite unité de transmission de données (204) et desdites données de dictionnaire mémorisées dans ladite unité de mémorisation de données de dictionnaire (101),
dans lequel, lorsque l'identité de ladite personne a été authentifiée dans ladite première unité d'authentification de personne (203), lesdites données devant être utilisées dans ladite deuxième authentification de personne sont transmises de ladite unité de transmission de données (204) audit dispositif d'authentification (100, 110, 119),
**caractérisé en ce que** :
ladite unité de mémorisation de données biométriques (201) mémorise une pluralité de types de données biométriques, et
ladite unité de transmission de données (204) est conçue pour sélectionner et fournir en sortie l'un des types de données biométriques mémorisées dans ladite unité de mémorisation de données biométriques (201) en réponse à une demande envoyée par le dispositif d'authentification (100, 110, 119).

5. Système d'authentification biométrique selon la revendication 4, dans lequel ledit dispositif d'authentification (110, 119) comprend une unité de génération de données correspondantes (111) qui, sur la base desdites données biométriques transmises de ladite unité de transmission de données (204), génère des données correspondantes ayant une certaine longueur binaire et correspondant auxdites données biométriques, dans lequel
des données de dictionnaire spécifiques mémorisées dans ladite unité de mémorisation de données de dictionnaire (101) sont localisées en utilisant lesdites données correspondantes générées et ladite deuxième unité d'authentification de personne (103) exécute ladite authentification de personne sur la base desdites données de dictionnaire spécifiques et desdites données biométriques transmises.

6. Système d'authentification biométrique selon la revendication 5, dans lequel, lorsque ladite authentification de personne fondée sur lesdites données de dictionnaire spécifiques ne peut pas être exécutée, ledit dispositif d'authentification (119) exécute ladite authentification de personne sur la base de la totalité desdites données de dictionnaire mémorisées dans ladite unité de mémorisation de données de dictionnaire (101) et desdites données biométriques transmises.

7. Système d'authentification biométrique selon la revendication 4, 5 ou 6, dans lequel ledit dispositif terminal (200) comprend une première unité de traitement de données biométriques (205) qui traite au moins partiellement lesdites données biométriques sélectionnées à partir de ladite unité de mémorisation de données biométriques (201), et une première unité de mémorisation de données de traitement (206) qui mémorise des données que ladite première unité de traitement de données biométriques (205) utilise pour traiter lesdites données biométriques, et
ledit dispositif d'authentification (100) comprend une deuxième unité de traitement de données biométriques (104), qui traite lesdites données de dictionnaire au moins partiellement et une deuxième unité de mémorisation de données de traitement (105) qui mémorise des données que ladite deuxième unité de traitement de données biométriques (104) utilise pour traiter lesdites données de dictionnaire, et dans lequel
ladite deuxième unité d'authentification de personne (103) exécute ladite authentification de personne sur la base desdites données biométriques traitées et desdites données de dictionnaire traitées.

8. Système d'authentification biométrique selon l'une quelconque des revendications 4 à 7, dans lequel ledit dispositif d'authentification (100) comprend une unité de mémorisation de données de conversion (106) qui mémorise des données de conversion concernant lesdites données biométriques utilisées dans ladite deuxième unité d'authentification de personne (103), et
ledit dispositif terminal (200) comprend une unité de conversion de données biométriques (207) qui convertit le format desdites données biométriques mémorisées dans ladite unité de mémorisation de données biométriques (201), et dans lequel
ladite unité de conversion de données biométriques (207) convertit le format desdites données biométriques en utilisant lesdites données de conversion transmises depuis ladite unité de mémorisation de données de conversion (106), et lesdites données biométriques à format converti sont transmises audit dispositif d'authentification (100).
